# EUROPEAN PATENT SPECIFICATION

(11) **EP 1 089 453 B1**
(45) Date of publication and mention of the grant of the patent: **10.11.2010**
(21) Application number: 99830618.7
(22) Date of filing: 30.09.1999
(51) Int. Cl.: H04B 3/54, H04B 3/56

(54) **Level control of the signal produced by a transceiver coupled to a power distribution line**
Pegelregulierung eines Signals, das von einem Sense-Empfänger produziert wird, der an eine Stromleitung angeschlossenen ist
Commande de niveau du signal produit par un émetteur-récepteur couplé à une ligne de distribution d'électricité

(43) Date of publication of application: 04.04.2001
(73) Proprietor: STMicroelectronics Srl, 20041 Agrate Brianza (MB) (IT)
(72) Inventor: Cantone, Giuseppe, 96100 Siracusa (IT); Cappelletti, Roberto, 20010 Cornaredo (IT)
(74) Representative: Pellegri, Alberto

(56) References cited:
- EP-A- 0 267 887
- US-A- 4 451 801

## Description

### FIELD OF THE INVENTION

The invention relates in general to data transmission systems and in particular to an interface circuit for coupling transceivers to power distribution lines.

### BACKGROUND OF THE INVENTION

Electric power distribution networks are diffused in large areas of the world. Mainly, they serve to convey and supply electric power and their possible exploitation as media for transmitting information is well known.

Such a medium of transmitting data is notably advantageous for communicating with users located in remote areas. Given that the majority of these users somehow have appliances and instruments connected to a power distribution line, the relevant costs of installing a dedicated line for conveying information may be avoided.

The feasibility of this type of data transmission, referred to as "conveyed waves", benefits from the fact that electric power is distributed with a well established frequency. The techniques of transmitting-receiving signals are based on the modulation of a carrier frequency with the signal to be sent thus allocating such a signal to a certain frequency band unoccupied by other signals. Therefore, is substantially possible to send on the same power line more signals occupying frequency bands that do not overlap with each other, having the possibility to select only the desired signal band during the reception phase.

The transmission of information on power distribution lines excellently suited for sending to particular site control signals for the appliances installed in those premises, without relaying on telephone lines or on radio transmissions.

Transmission or reception of data signals on a power distribution line requires the use of a suitable interfacing circuit between the line and the transceiver to efficiently inject a modulated carrier in the power distribution line.

Indeed, one of the problems in transmitting information on power lines is that the impedance of the medium of transmission is inconstant, and the variations may be of several orders of magnitude depending on the presence or absence of loads connected to the power line.

In order to reduce the problems due to the extreme aleatory character of the line impedance, the document DH028 issued by ENEL in September 1992, states that in Italy the control of the level of the signal output by a transceiver coupled to a power distribution line should be implemented in a current mode when the impedance is below a certain value that in the particular recommendation if fixed to 5Q, and in a voltage when the impedance is above that value.

The known interface circuits can either control the level in current mode or in voltage mode, as described in the US patent 4,636,771, and therefore they must be chosen in function of the prevailing line impedance condition.

It is evident the need or usefulness of an interface circuit that monitors the impedance of the line and switch automatically from a current mode to a voltage mode of controlling the signal to be injected on a power distribution line and viceversa, depending on the actual impedance of the line.

### OBJECT AND SUMMARY OF THE INVENTION

It has now been found and is the object of the present invention a new method and a relative circuit for controlling the level of the output signal produced by a transceiver of digital data coupled to a power distribution line capable of switching automatically from a current mode to a voltage mode and viceversa, depending on the sensed impedance of the distribution line according to independent claims 1 and 3.

Other aspects of the invention are described in the dependent claims.

### BRIEF DESCRIPTION OF THE DRAWINGS

The various aspects and advantages of the invention will become even more evident from the description of an embodiment and by referring to the attached drawings, wherein:
**Figure 1** is a diagram of line impedance-voltage level of the transmitted signal;
**Figure 2** illustrates a possible circuit diagram of the interface of the invention;
**Figure 3** is a possible circuit diagram of the gain controlled voltage amplifier of the invention;
**Figure 4** illustrates a suitable circuit for producing a digital datum N from a signal representing the level of the modulated signal to be injected on the line;
**Figure 5** is a flow chart of the algorithm implemented by the control logic circuit.

### DESCRIPTION OF AN EMBODIMENT OF THE INVENTION

ENEL specifications call for a transmission characteristic according to which the output signal should be kept at a constant voltage level of 1 to 2 V_{EFF} if the line impedance is greater than 5Ω, or at a current level of 200 to 400 mA_{EFF} if the line impedance is lower than 5Ω.

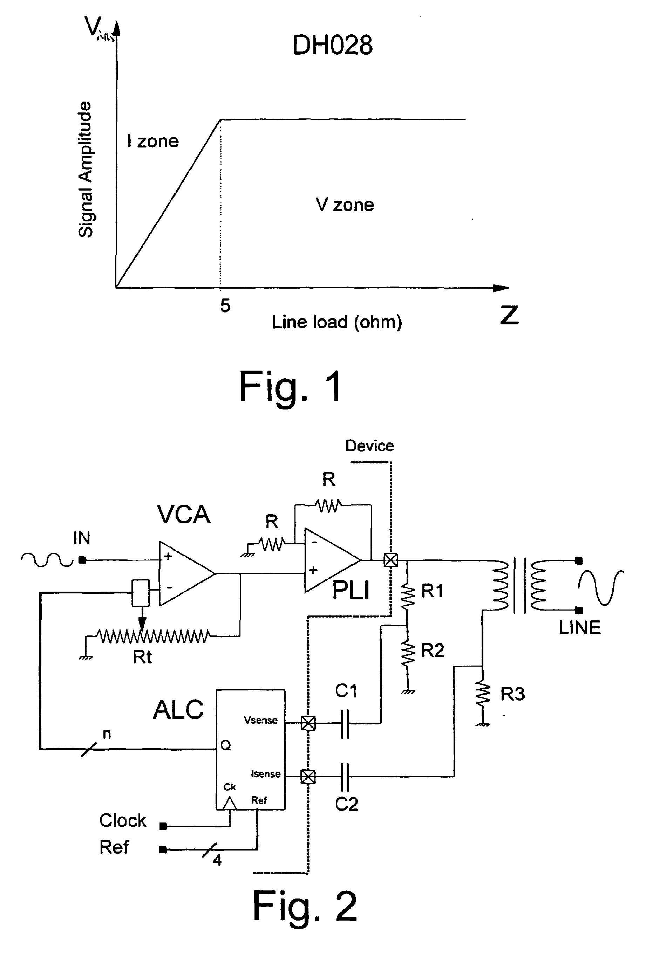

This recommended transmission characteristic is depicted in figure 1 wherein the waveforms of the effective value of the voltage signal to be injected on the line depending on the line impedance are shown.

In order to illustrate the functioning principle of the invention, reference is made to an embodiment of a single ended output driver, as in the example shown in figure 2. Of course, the concepts that will be described may be equally applicable to other output driver for example of a fully differential amplifying structure.

The interface circuit that implements the method of the invention may be realized by detecting two magnitudes Vsense and Isense, respectively representing the voltage level and the current level of the signal to be coupled to the transmission line. As depicted in the example of figure 2, this may be done by deriving a scaled replica of the output voltage signal with a voltage divider (series of R1 and R2 in the figure) connected in parallel to the output, and obtaining an Isense voltage signal proportional to the current level of the output signal by placing a current sensing resistor R3 in series to the output.

Naturally, the signals Vsense and Isense may also be differently produced, for example, by using other equivalent integrated components instead of resistors. Moreover, since it is only necessary that such signals represent the voltage and current respectively on a load, any signal that satisfies such a requisite in the interface may be sensed.

For example, instead of sensing the output current through a sensing resistor crossed by the load current, a representative value of the output current may be obtained by using current mirrors drawing current from the output buffer of the interface (PLI).

Such Vsense and Isense signals are compared in a control circuit with respective threshold pairs that define the permitted maximum and minimum values of the variation interval of the current level and of the voltage level of the output signal to be coupled to the power line. The control logic circuit produces, according to the method of the invention, a digital datum N that is input to a VCA (Voltage Controlled Amplifier). The VCA amplifies the signal on the IN input to be transmitted, by a quantity established by the digital datum N, feeding the signal so amplified to a second amplifier having a high current gain. At the output of the interface PLI, the signal is coupled to the power line.

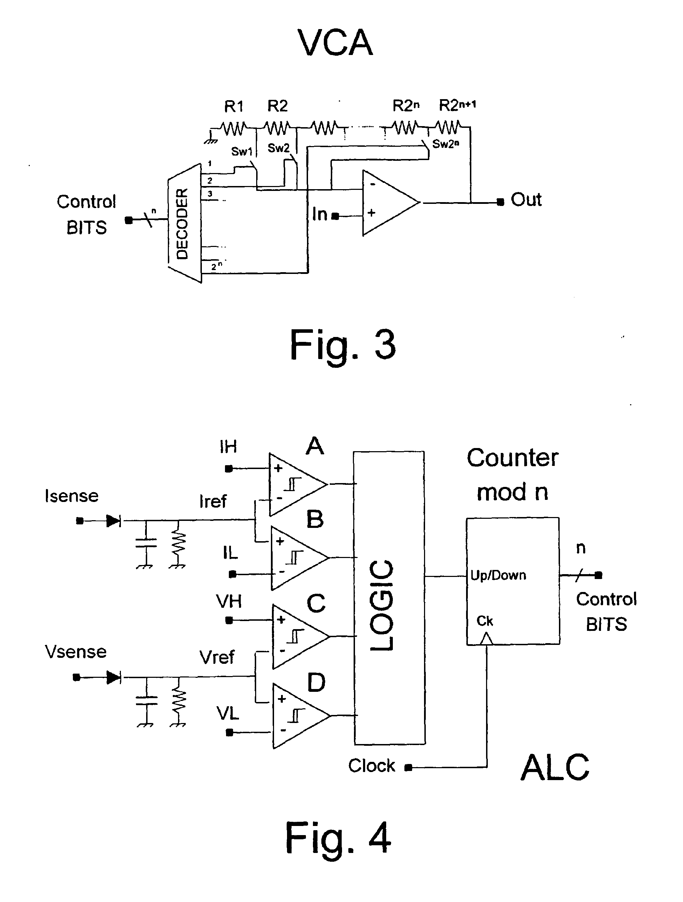

The circuit of the VCA may be as shown in figure 3. Substantially, it is an operational amplifier with negative feedback, realized by a series of resistors constituting a voltage divider, the taps of which have switches for connecting or disconnecting them to an inverting input of the operational amplifier. The digital datum N produced by the control circuit is fed to a decoder which, correspondingly control the switches of the voltage divider, for modifying the feedback factor and thereby the voltage gain.

A possible embodiment of the control system is illustrated in figure 4. Vsense and Isense are alternate signals because they are proportional to the voltage level and to the current level of the signal being coupled to the power line. They are rectified and integrated in order to obtain DC signals Vref and Iref proportional to their amplitudes. This may be effected, as shown in the figure, using a diode connected in series to a low pass R-C filter or by using any other circuit outputting a DC voltage proportional to the amplitude of the respective alternate input signal.

Iref and Vref are then compared with respective high and low thresholds, by the use of four comparators that produce the logic signals A, B, C, D. The LOGIC block processes the signals output by the comparators and controls an Up/Down counter whose output provides the digital datum N.

The counting of the Up/Down counter is timed by a clock signal having a lower frequency than the frequency of the modulating signals.

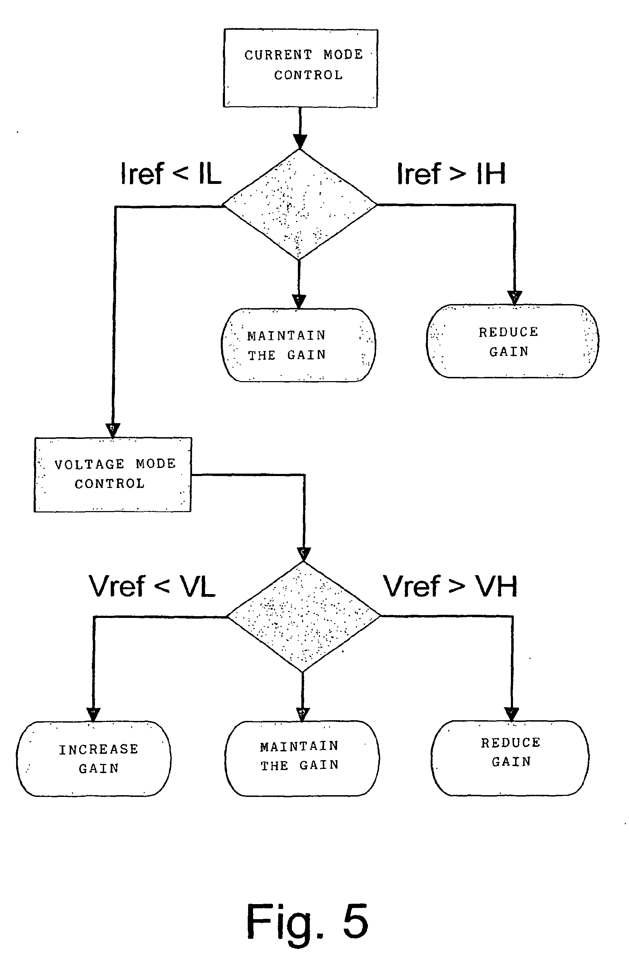

The algorithm of the invention is schematically summarized in figure 5. At start, the possibility of implementing a current mode control is prioritarily assessed by comparing Iref with the high and low thresholds, IH and IL respectively.

If Iref is greater than the low threshold IL, the current gain is kept constant or reduced depending on whether Iref is lower or higher than the IH high threshold. However, if Iref is lower than IL, that is, if the current level of the signal coupled to the output is lower than a minimum value, then this means that the impedance of the distribution line is higher than the maximum value established for using a current mode control and it is necessary to switch to a voltage mode control.

The voltage mode control is simply effected by varying the voltage gain of the VCA so that the signal Vref remains between the VL and VH thresholds.

## Claims

1. A method of regulating a level of the signal output by a transceiver carrying digital information said transceiver comprising voltage controlled amplifier (VCA) whose gain is variable and the transceiver bering coupled to a power distribution line during a transmission phase, the method comprising the steps of:
comparing the current level (Iref) of said output signal with a pre-established minimum threshold (IL) and a pre-established maximum threshold (IH);
reducing the current level (Iref) of said output signal when said maximum threshold (IH) is exceeded by reducing the gain of the voltage controlled amplifier (VCA);
maintaining the current level (Iref) of said output signal when included between both said minimum and said maximum thresholds;
passing to a voltage control mode for controlling the levels of said output signal when the current level (Iref) of the output signal becomes lower than said minimum threshold (IL).

2. The method according to claim 1, wherein said voltage control mode further comprises the steps of:
comparing the voltage level (Vref) of said output signal with a pre-established low threshold (VL) and a preestablished high threshold (VH) thresholds and regulating the gain to maintain the voltage level (Vref) within said thresholds.

3. A coupling interface for a transceiver of digital information coupled to a power distribution line comprising means for regulating the level of the output signal coupled to the line during a transmission phase, **characterized in that** said means comprise
a voltage controlled amplifier (VCA) the gain of which is controlled in function of a digital datum (N) and to an input of which the signal to be transmitted is applied;
a current amplifier (PLI) coupled to the output of said voltage amplifier (VCA) delivering the signal to be injected on the line;
a first pair of comparators comparing the voltage on a current sensing resistor in series to the output of said current amplifier (PLI) with a first pair of pre-established high and low thresholds and producing a first pair of first (A) and second (B) logic signals;
a second pair of comparators comparing a signal representing the output voltage of said current amplifier (PLI) with a second pair of pre-established high and low thresholds and producing a second pair of third (C) and fourth (D) logic signals;
a control logic circuit receiving as input said first and second pairs of logic signal (A, B, C, D) and outputting said digital control datum (N); wherein said digital datum is such to:
reduce the gain of said voltage amplifier VCA) if the first logic signal (A) assumes a false logic value;
maintain the same current gain if both the first logic signal (A) and the second logic signal (B) assume a true logic value;
switch to voltage control mode if the second logic signal (B) assumes a false logic value.

4. The coupling interface according to claim 3, wherein said digital datum is such to further:
reduce the voltage gain of said voltage controlled amplifier (VCA) if the third logic signal (C) assumes a false logic value;
maintains the same voltage gain of said voltage controlled amplifier (VCA) when both
the third logic signal (C) and the fourth logic signal (D) assume a true logic value;
increase the voltage gain of said voltage controlled amplifier (VCA) if the fourth logic signal (D) assumes a false logic value.

## Patentansprüche

1. Methode zum Einstellen einer Stärke des Ausgabesignals durch einen digitale Information tragenden Sendeempfänger, wobei
der Sendeempfänger über einen spannungsgesteuerten Verstärker (VCA) verfügt, dessen Verstärkung variabel ist und
der Sendeempfänger während einer Transmissionsphase an eine Leistungsverteilungsleitung gekoppelt ist und
die Methode folgende Schritte aufweist:
Vergleichen der Stromstärke (Iref) des Ausgabesignals mit einem vorbestimmten minimalen Schwellenwert (IL) und einem vorbestimmten maximalen Schwellenwert (IH) ;
Reduzieren der Stromstärke (Iref) des Ausgabesignals, wenn der maximale Schwellenwert (IH) überschritten wird durch Reduzieren der Verstärkung des spannungsgesteuerten Verstärkers (VCA) ;
Aufrechterhalten der Stromstärke (Iref) des Ausgabesignals, wenn es sowohl von dem minimalen als auch dem maximalen Schwellenwert eingefasst ist;
Übergehen in einen Spannungskontrollmodus zur Einstellung der Stärke des Ausgabesignals, wenn die Stromstärke (Iref) des Ausgabesignals kleiner wird als der minimale Schwellenwert (IL).

2. Methode nach Anspruch 1, bei der der Spannungskontrollmodus zusätzlich die weiteren Schritte aufweist:
Vergleichen der Spannungsstärke (Vref) des Ausgabesignals mit einem vorbestimmten niedrigschwelligen (VL) und einem vorbestimmten hochschwelligen (VH) Schwellenwert und Einstellen der Verstärkung, so dass die Spannungsstärke (Vref) innerhalb der Schwellenwerte verbleibt.

3. Kopplungsschnittstelle für einen Sendeempfänger für digitale Information zur Ankopplung an eine Leistungsverteilungsleitung, welche Mittel zum Einstellen des in die Leitung während einer Transmissionsphase eingekoppelten Ausgabesignals aufweist,
**dadurch gekennzeichnet, dass** das Mittel aufweist:
einen spannungsgesteuerten Verstärker (VCA), dessen Verstärkung als Funktion eines digitalen Datums (N) gesteuert wird und auf einen Eingang dessen das zu übertragende Signal angewendet wird;
einen Stromverstärker (PLI), welcher an die Ausgabe des Spannungsverstärkers (VCA) gekoppelt ist, welcher das in die Leitung zu injizierende Signal liefert;
ein erstes Kamparatorpaar, welches die Spannung an einem spannungsabnehmenden Widerstand in Serie mit der Ausgabe des Stromverstärkers (PLI) mit einem ersten Paar von vorbestimmten hohen und niedrigen Schwellenwerten vergleicht und ein erstes Paar von ersten (A) und zweiten (B) logischen Signalen erzeugt;
ein zweites Komparatorpaar, welches ein das Ausgabesignal des Stromverstärkers (PLI) repräsentierendes Signal mit einem zweiten Paar von vorbestimmten hohen und niedrigen Schwellenwerten vergleicht und ein zweites Paar von dritten (C) und vierten (D) logischen Signalen erzeugt;
ein Kontrolllogikschaltkreis, welcher als Eingabe das erste und das zweite Paar der logischen Signale (A, B, C, D) erhält und das digitale Kontrolldatum (N) ausgibt;
wobei das digitale Datum dazu ausgestaltet ist:
die Verstärkung des Spannungsverstärkers (VCA) zu reduzieren, wenn das erste logische Signal (A) einen falschen logischen Wert annimmt;
die gleiche Stromverstärkung zu erhalten, wenn sowohl das erste logische Signal (A) als auch das zweite logische Signal (B) einen wahren logischen Wert annehmen;
in den Spannungskontrollmodus umzuschalten, wenn das zweite logische Signal (B) einen falschen logischen Wert annimmt.

4. Kopplungsschnittschnelle nach Anspruch 3, wobei das digitale Datum weiter dazu ausgelegt ist:
die Spannungsverstärkung des spannungskontrollierten Verstärkers (VCA) zu reduzieren, wenn das dritte logische Signal (C) einen falschen logischen Wert annimmt;
die gleiche Spannungsverstärkung des spannungskontrollierten Verstärkers (VCA) zu erhalten, wenn sowohl das dritte logische Signal (C) als auch das vierte logische Signal (D) einen wahren logischen Wert annehmen;
die Spannungsverstärkung des spannungskontrollierten Verstärkers (VCA) erhöhen, wenn das vierte logische Signal (D) einen falschen logischen Wert annimmt.

## Revendications

1. Procédé de régulation du niveau d'un signal fourni par un émetteur-récepteur transportant des informations numériques, l'émetteur-récepteur comprenant un amplificateur commandé en tension (VCA) dont le gain est variable et l'émetteur-récepteur étant couplé à une ligne de distribution d'énergie pendant une phase de transmission, le procédé comprenant les étapes suivantes :
comparer le niveau de courant (Iref) du signal de sortie à un seuil minimum préétabli (IL) et à un seuil maximum préétabli (IH) ;
réduire le niveau de courant (Iref) du signal de sortie lorsque le seuil maximum (IH) est dépassé en réduisant le gain de l'amplificateur commandé en tension (VCA) ;
maintenir le niveau de courant (Iref) du signal de sortie lorsqu'il est compris entre les deux seuils minimum et maximum ;
passer à un mode de commande en tension pour commander les niveaux du signal de sortie lorsque le niveau de courant (Iref) du signal de sortie devient inférieur au seuil minimum (IL).

2. Procédé selon la revendication 1, dans lequel le mode de commande en tension comprend en outre les étapes suivantes :
comparer le niveau de tension (Vref) du signal de sortie à un seuil bas préétabli (VL) et à un seuil haut préétabli (VH) et réguler le gain pour maintenir le niveau de tension (Vref) entre les seuils.

3. Interface de couplage pour un émetteur-récepteur d'informations numériques couplé à une ligne de distribution d'énergie, comprenant des moyens pour réguler le niveau du signal de sortie couplé à la ligne pendant une phase de transmission, **caractérisée en ce que** lesdits moyens comprennent :
un amplificateur commandé en tension (VCA) dont le gain est commandé en fonction d'une donnée numérique (N) et sur une entrée duquel le signal à transmettre est appliqué ;
un amplificateur de courant (PLI) couplé à la sortie de l'amplificateur en tension (VCA) fournissant le signal à injecter sur la ligne ;
une première paire de comparateurs comparant la tension sur une résistance de mesure de courant en série avec la sortie de l'amplificateur de courant (PLI) à une première paire de seuils haut et bas préétablis et produisant une première paire de premier (A) et deuxième (B) signaux logiques ;
une deuxième paire de comparateurs comparant un signal représentant la tension de sortie de l'amplificateur de courant (PLI) à une deuxième paire de seuils haut et bas préétablis et produisant une deuxième paire de troisième (C) et quatrième (D) signaux logiques ;
un circuit de logique de commande recevant en entrée les première et deuxième paires de signaux logiques (A, B, C, D) et fournissant ladite donnée de commande numérique (N) ;
dans lequel la donnée numérique est destinée à :
réduire le gain de l'amplificateur de tension (VCA) si le premier signal logique (A) prend une valeur logique fausse ;
maintenir le même gain en courant si le premier signal logique (A) et le deuxième signal logique (B) prennent tous deux une valeur logique vraie ;
commuter sur un mode de commande en tension si le deuxième signal logique (B) prend une valeur logique fausse.

4. Interface de couplage selon la revendication 3, dans laquelle la donnée numérique est en outre destinée à :
réduire le gain en tension de l'amplificateur commandé en tension (VCA) si le troisième signal logique (C) prend une valeur logique fausse ;
maintenir le même gain en tension de l'amplificateur commandé en tension (VCA) lorsque le troisième signal logique (C) et le quatrième signal logique (D) prennent tous deux une valeur logique vraie ;
augmenter le gain en tension de l'amplificateur commandé en tension (VCA) si le quatrième signal logique (D) prend une valeur logique fausse.
